Europäisches Patentamt

European Patent Office

Office européen des brevets

(11) Veröffentlichungsnummer: **0 312 905 B1**

(12) **EUROPÄISCHE PATENTSCHRIFT**

(45) Veröffentlichungstag der Patentschrift: **29.04.92**

(21) Anmeldenummer: **88116931.2**

(22) Anmeldetag: **12.10.88**

(51) Int. Cl.⁵: **G06K 9/72**

(54) **Verfahren zur automatischen Zeichenerkennung.**

(30) Priorität: **16.10.87 DE 3735139**

(43) Veröffentlichungstag der Anmeldung:
**26.04.89 Patentblatt 89/17**

(45) Bekanntmachung des Hinweises auf die
Patenterteilung:
**29.04.92 Patentblatt 92/18**

(84) Benannte Vertragsstaaten:
**AT BE CH DE ES FR GB IT LI NL SE**

(56) Entgegenhaltungen:
**GB-A- 1 201 178**
**US-A- 3 492 653**
**US-A- 3 651 459**

**ASSOCIATION FOR COMPUTING MACHINE-RY. PROCEEDINGS OF THE 19th NATIONAL CONFERENCE, Philadelphia, Pa., 25.-27. August 1964, Seiten D2.4-1 - D.2.4-13, A.C.M. Publication, New York, US; C.M. VOSSLER et al.: "The use of context for correcting garbled english text"**

(73) Patentinhaber: **COMPUTER GESELLSCHAFT KONSTANZ MBH**
**Max-Stromeyer-Strasse 116**
**W-7750 Konstanz(DE)**

(72) Erfinder: **Mittelbach, Helmut, Dipl.-Ing.**
**Austrasse 30**
**W-7750 Konstanz(DE)**
Erfinder: **Müller, Xaver, Dr.-Ing.**
**Hohenhewenstrasse 5**
**W-7760 Radolfzell(DE)**
Erfinder: **Schlegel, Peter, Dipl.-Ing.**
**Rheingasse 17**
**W-7750 Konstanz(DE)**

(74) Vertreter: **Fuchs, Franz-Josef, Dr.-Ing. et al**
**Postfach 22 13 17**
**W-8000 München 22(DE)**

**Beschreibung**

Die Erfindung betrifft ein Verfahren zur automatischen Zeichenerkennung nach den Merkmalen des Oberbegriffs des Patentanspruchs 1.

Im Gegensatz zur Zeichenerkennung durch den Menschen, der die Zeichen einer Zeichenfolge normalerweise nicht isoliert betrachtet, sondern sie in den Sinnzusammenhang mit den benachbarten Zeichen setzt, war die automatische Zeichenerkennung lange Zeit ausschließlich auf die Erkennung von Einzelzeichen beschränkt. Trotz einer inzwischen hohen Erkennungssicherheit bei der Einzelzeichenklassifizierung hat sich sehr rasch gezeigt, daß eine weitere Leistungssteigerung nur dann möglich ist, wenn der Kontext in den Erkennungsprozeß einbezogen wird. Mit Hilfe des Kontextes lassen sich dann nämlich in einer dem menschlichen Erkennen sehr nahekommenden Weise auch Substitutionen und Rückweisungen, das heißt falsch oder überhaupt nicht erkannte Zeichen als Fehler erkennen und nachträglich gegebenenfalls noch korrigieren.

Ein bekanntes Kontext-Verfahren (siehe VDE-Fachberichte, 30/1978, Seiten 195 bis 206) sieht beispielsweise vor, daß vom Zeichenklassifikator für nicht eindeutig erkennbare Zeichen einer Zeichenfolge jeweils mehrere Alternativen angeboten werden, aus denen dann eine Reihe von Alternativ-Zeichenfolgen gebildet werden. Diese Alternativ-Zeichenfolgen werden schließlich mit vorher in einem Lexikon-Speicher hinterlegten zugelassenen Wörtern verglichen, wobei die mit einem zugelassenen Lexikon-Wort übereinstimmende Alternativ-Zeichenfolge letztlich ausgewählt wird. Auf diese Weise kann zwar die Erkennungssicherheit grundsätzlich gesteigert werden, ein derartiges Verfahren hat aber den Nachteil, daß auf diese Weise nur Zeichenfolgen korrigiert werden können, deren legitime Vergleichswörter im Lexikon gespeichert waren.

Aus US-A-3 492 653 ist auch ein Kontextverfahren bekannt, bei dem eine auf Grund des Kontextvergleichs vorgesehene Korrektur nur dann durchgeführt wird, wenn der Substitutionsübergang auf Grund der Klassifikatorcharakteristik für die jeweils in Betracht kommenden Zeichen wahrscheinlich ist. Letzteres Verfahren ist auch auf Vergleiche mit vorbestimmten Wörtern beschränkt.

Der vorliegenden Erfindung liegt daher die Aufgabe zugrunde, ein Zeichenerkennungsverfahren unter Einbeziehung einer Kontextverarbeitung so weiterzubilden, daß das für den Kontextvergleich notwendige Lexikon nicht an fest vorgegebene Speichereinträge gebunden ist, sondern relativ leicht an neu auftretende Zeichenfolgen angepaßt werden kann, so daß sich aufgrund seines dynamischen Verhaltens im Vergleich zum Stand der Technik insgesamt bessere Leseergebnisse erzielen lassen.

Diese Aufgabe wird ausgehend von einem Zeichenerkennungsverfahren der im Oberbegriff des Patentanspruchs 1 genannten Art durch die in diesem Anspruch angegebenen Maßnahmen gelöst.

Die Vorteile dieses erfindungsgemäßen Verfahrens bestehen zum einen darin, daß das Kontextlexikon an keinen fest vorgegebenen Inhalt gebunden ist, sondern sich sowohl in der Aufbauphase als auch in der eigentlichen Korrekturphase mit Hilfe der jeweils neu eingelesenen Zeichenfolgen fortlaufend aktualisiert mit der Besonderheit, daß die jeweiligen Zeichenfolgen nicht notwendigerweise "sinnvoll" aus der orthographischen oder grammatikalischen Sicht einer Sprache sein müssen. Das erfindungsgemäße Verfahren ist daher nicht an eine bestimmte Sprache gebunden, sondern innerhalb des vom Klassifikator erkennbaren Zeichenvorrats auf jede beliebige Zeichenfolge anwendbar.

Eine vorteilhafte Weiterbildung der Erfindung ist im Unteranspruch angegeben.

Im folgenden wird das erfindungsgemäße Verfahren einschließlich seiner weitere Ausgestaltungen anhand der Zeichnung näher erläutert.

Dabei zeigen

FIG 1    den prinzipiellen Aufbau einer Zeichenerkennungseinrichtung mit Kontextverarbeitung

FIG 2    das Prinzip einer Kontextverarbeitung gemäß der Erfindung

FIG 3    ein detailliertes Blockschaltbild für die Durchführung eines Kontextverfahrens gemäß der Erfindung.

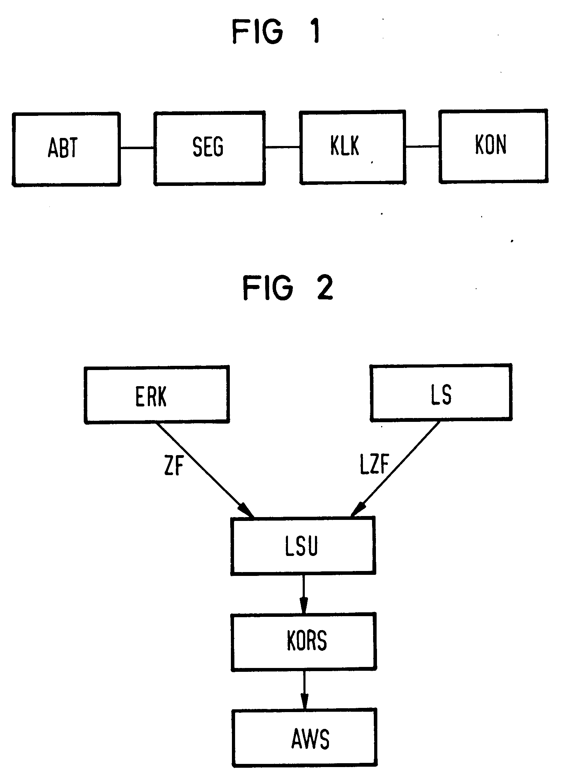

Das in FIG 1 dargestellte Blockschaltbild zeigt die Grundelemente einer Einrichtung zur automatischen Zeichenerkennung mit einer Abtasteinrichtung ABT, einer Zeichensegmentierungseinrichtung SEG und einer Klassifikatoreinrichtung KLK, die aus den abgetasteten und segmentierten Bildmustern eine Einzelzeichenerkennung durchführt, indem sie die jeweiligen Bildmuster einer von n Zeichenklassen innerhalb des Zeichenvorrates zuordnen. Dieser Einzelzeichenklassifikation schließt sich eine Kontextverarbeitungseinrichtung KON an, die die vom Klassifikator ausgegebenen Einzelzeichen nunmehr im Zusammenhang betrachtet, um anhand eines Vergleichs mit lexikalisch gespeicherten identischen bzw. sehr ähnlichen Zeichenfolgen eine größere Erkennungssicherheit zu erreichen.

Prinzipiell läuft das Kontextverfahren, wie in FIG 2 dargestellt, so ab, daß beispielsweise aus optisch gelesenen Daten eines Beleges in einer Zeichenerkennungseinrichtung ERK einzelne Zeichenfolgen ZF zusammengestellt werden, die mit in einem Lexikonspeicher LS hinterlegten Lexikon-Zeichenfolgen LZF verglichen werden. Die Erstellung dieses Lexikons erfolgt in der Weise, daß in einer dem eigentlichen Kontext-Verfahren vorangestellten Aufbauphase aus fortlaufend gelesenen Belegdaten solche Zeichenfolgen ausgewählt werden, die keine Rückweisungen enthalten und mit hoher Wahrscheinlichkeit substitutionsfrei sind. Außerdem wird im Lexikon die jeweilige Häufigkeit gleichartiger Zeichenfolgen registriert. Sobald das Lexikon aufgebaut ist, beginnt das eigentliche Kontextverfahren, wobei in einer Lexikon-Suchlaufsteuerung LSU zur jeweils aktuellen Zeichenfolge ZF aus den aus dem Lexikonspeicher LS gelesenen Lexikon-Zeichenfolgen mehrere möglichst ähnliche bzw. identische Zeichenfolgen LZF, angeboten werden. In einer nachfolgenden Korrekturschaltung KORS wird schließlich die beste Lexikon-Zeichenfolge LZF ausgewählt und sofern keine Identität, sondern nur eine mehr oder weniger große Ähnlichkeit besteht, mit Hilfe einer Auswerteschaltung AWS eine Rückweisungs-bzw. Substitutions-Korrektur, gegebenenfalls auch eine endgültige Wort-Rückweisung durchgeführt.

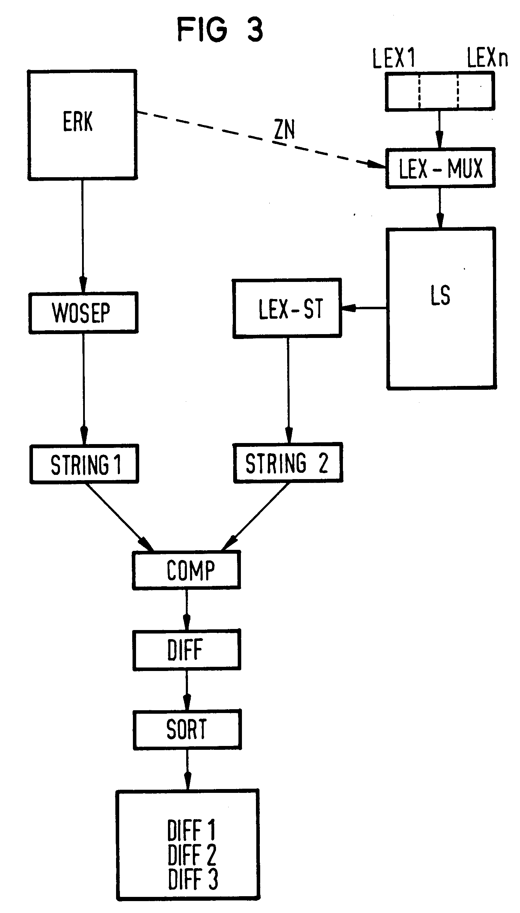

Weitere Einzelheiten des Kontext-Verfahrens werden im folgenden anhand der FIG 3 beschrieben. Dabei wird vorausgesetzt, daß der abzutastende Beleg mehrere Zeilen aufweist, denen verschiedene Bedeutungsinhalte zugeordnet sind. Jeder dieser Zeilen kann nun zum Beispiel ein eigenes Kontextlexikon oder ein Teil eines Gesamt-Kontextlexikons zugeordnet werden. Aus der jeweils abgetasteten Belegzeile werden in einer Wortseparationsschaltung WOSEP jeweils durch Wortanfang und Wortende markierte Zeichenfolgen, sogenannte Wortstrings, gebildet und in ein erstes String-Register STRING 1 übertragen. Außerdem wird über einen Lexikon-Auswahlschalter LEX-MUX, gesteuert durch eine Zeilennummer ZN, eines von mehreren Lexika LEX 1... LEX n ausgewählt und dessen Inhalt in einen Lexikonspeicher LS übertragen. Von dort werden die einzelnen Lexikon-Zeichenfolgen LZF mit Hilfe einer Lexikon-Steuerung LEX-ST in ein zweites Wortstring-Register STRING 2 übertragen. Die Ausgänge der beiden Register STRING 1, STRING 2 sind mit je einem Eingang einer Vergleichseinrichtung COMP verbunden, in der der jeweils aktuelle, gerade gelesene String mit mehreren Vergleichsstrings aus dem Lexikonspeicher LS verglichen wird. Anhand der einzelnen Vergleichsergebnisse DIFF werden in einer nachfolgenden Sortier-Schaltung SORT beispielsweise die drei besten Vergleichsergebnisse DIFF 1, 2, 3 ausgewählt, wobei jedem Vergleichsergebnis der Häufigkeitsindex für die jeweils betreffende Lexikon-Zeichenfolge LZF zugeordnet wird. Beim Vergleich zwischen dem aktuellen String und dem aussortierten Lexikon-String (Hypothese) wird anhand von Identitäten und klassifikatorcharakteristischen Substitutionsübergängen zwischen gelesenem String und Hypothese sowie der Auftrittswahrscheinlichkeit der Hypothese die jeweilige Korrekturfähigkeit nach folgenden Kriterien unterschieden:
- Hypothese und String sind identisch
- Hypothese und String sind sehr ähnlich
- Hypothese und String sind sehr ähnlich, die Hypothese befindet sich jedoch noch in der Aquisitionsphase.
- Hypothese ist nicht der Begriff zum String

Im Vergleich der Hypothesen untereinander wird eine Kontextaussage gemacht, wobei je nach Qualität des in bezug auf Häufigkeit und Identität/Ähnlichkeit bestmöglichen Vergleichsergebnisses DIFF verschiedene Korrekturvarianten in Betracht kommen.

Bei Identität zwischen Hypothese und String bedeutet dies zum Beispiel, daß die aktuelle Zeichenfolge als eindeutig erkannt akzeptiert wird. Anders bei der Korrektur, bei der String und Hypothese zwar sehr ähnlich, aber nicht identisch sind. Hier wird eine Kontrolle durchgeführt derart, daß die Klassifikatorcharakteristik in den Erkennungsprozess einbezogen wird. Wenn beispielsweise durch die Kontextverarbeitung ein Handschrift-"M" in ein "H" korrigiert wird, dann wird diese Korrektur durch den Klassifikator in Anbetracht der Ähnlichkeit der beiden Zeichen bestätigt werden, wogegen zum Beispiel eine Korrektur von "M" in "C" aufgrund der Klassifikatorcharakteristik als unwahrscheinlich abgelehnt werden müßte.

Im folgenden werden Beispiele für Rückweisungs- und/oder Substitutions-Korrekturen vorgestellt.

Beispiel 1 betrifft eine Rückweisungs-Korrektur

```
        STRING    1              STRING   2.

        G I E * S E N            Hypothese
                                 G I E S S E N
                                 S I E G E N
                                 G I E N G E N
                                 H E S S E N
```

Die Kontextbehandlung ergibt hier, daß die vom Klassifikator ausgegebene Zeichenfolge GIE*SEN (Rückweisung des Buchstabens S) in GIESSEN korrigiert wird.

Das zweite Beispiel betrifft eine Substitutions-Korrektur

```
        STRING 1                 STRING 2
        M E I D E L B E R G      Hypothese
                                 M E D A I L L E N
                                 M E U L E N B E R G
                                 H E I D E L B E R G
                                 F R I E D B E R G
                                 F E H L E N B E R G
```

Hier entscheidet sich die Kontext-Korrekturschaltung für die Hypothese 3, das heißt für HEIDELBERG. Unterstützt wird diese Korrektur durch die Klassifikatorcharakteristik, die die Änderung von "M" in "H" für zulässig erachtet. Ähnliches wäre bei einer Entscheidung zugunsten von FRIEDBERG nicht möglich, weil der Klassifikator zum Beispiel die Änderung von "M" in "F" niemals zulassen würde.
Das dritte Beispiel betrifft eine Rückweisung und Substitutions-Korrektur.

```
        STRING 1                 STRING 2
        * I C Ä A E L            Hypothese
                                 R E I C H E L T
                                 M I C H A E L
                                 M I C H E L
                                 B I C K E L
```

Hier wird sich die Kontext-Korrekturschaltung für MICHAEL entscheiden, zumal der Klassifikator die Ähnlichkeit zwischen "Ä" und "H" akzeptieren wird.

**Patentansprüche**

1.  Verfahren zur automatischen Zeichenerkennung, bei dem aus abgetasteten und aufbereiteten Bildmustern durch Zeichentrennung Einzelbildmuster gewonnen werden, die mit Hilfe einer Klassifikatoreinrichtung einer von n Zeichenklassen zugeordnet werden und bei dem ferner aus einer zusammenhängenden, durch Wortanfang und Wortende markierbaren Zeichenfolge wenigstens ein Datenstring gebildet wird, der mit in einer Speichereinrichtung hinterlegten Vergleichsstrings auf Identität oder Ähnlichkeit überprüft wird, wobei anhand der Übereinstimmung bzw. Teilübereinstimmung eine unveränderte bzw. gegebenenfalls korrigierte Zeichenaussage erfolgt,

- bei dem in der Speichereinrichtung ein Lexikon durch
    - Auswahl und Speicherung der keine Rückweisungszeichen enthaltenden Strings,
    - fortlaufende Aktualisierung der gespeicherten Strings durch ebenfalls keine Rückweisungszeichen aufweisenden und fortlaufend aus neugelesenen Zeichenfolgen gebildeten Strings, und durch
    - Aufzeichnung der Häufigkeit von jeweils identischen Strings erstellt wird,
- bei dem bei erstelltem Lexikon jeder, auch Rückweisungs- und Substitutionszeichen aufweisende neue String mit den gespeicherten Strings des Lexikons verglichen wird und mehrere identische und/oder möglichst ähnliche Strings mit ihrer jeweiligen Häufigkeit ermittelt werden,
- bei dem der in Bezug auf Ähnlichkeit und Häufigkeit bestmögliche String zur weiteren Auswertung ausgewählt wird, und
- bei dem eine auf Grund des Kontextvergleichs vorgesehene Korrektur nur dann durchgeführt wird, wenn der Substitutionsübergang auf Grund der Klassifikatorcharakteristik für die jeweils in Betracht kommenden Zeichen wahrscheinlich ist.

2. Verfahren nach Anspruch 1,
**dadurch gekennzeichnet,** daß bei Abtastung eines mehrere Zeilen enthaltenden Beleges, Formulares oder dergleichen, für einzelne Zeilen oder Zeilengruppen je eine Teil-Speichereinrichtung vorgesehen ist, in der jeweils zugeordnete Vergleichsstrings abgespeichert werden.

**Claims**

1. Method for automatic character recognition, in which individual image patterns are obtained from scanned and preprocessed image patterns by means of character separation, which image patterns are assigned with the aid of a classifier means to one of n character classes, and furthermore in which at least one data string is formed from a contiguous character string that can be marked by word start and word end, which data string is checked for identity or similarity with a compare string stored in a memory means, an unchanged or if necessary corrected character statement being made on the basis of the matching or partial matching,
    - in which a lexicon is generated in the memory means by
        - selecting and storing the strings that do not contain any rejection characters,
        - continuously updating the stored strings with strings that likewise do not have any rejection characters and are continuously formed from newly read character strings, and by
        - recording the frequency of identical strings in each case,
    - in which, when the lexicon has been generated, every new string, even ones having rejection and substitution characters, is compared with the stored strings of the lexicon and a plurality of identical and/or optimally similar strings are determined with their respective frequency,
    - in which the optimum string with respect to similarity and frequency is selected for further evaluation, and
    - in which a correction that is envisaged as a result of the context comparison is only executed if the substitution transition is probable for the respective characters in question on the basis of the classifier characteristic.

2. Method according to Claim 1, characterised in that when a document, form or the like containing a plurality of lines is scanned, there is provided in each case for individual lines or line groups a part-memory means in which the respective associated compare strings are stored.

**Revendications**

1. Procédé de reconnaissance automatique de caractères, selon lequel on obtient, par séparation des caractères, à partir de modèles d'images explorés et préparés, des modèles d'images individuels qui sont associés au moyen d'un dispositif de classement à l'une de n classes de caractères, et selon lequel, en outre, on forme, à partir d'une suite continue de signaux pouvant être marquée par un début et une fin de mot, au moins une suite de données dont l'identité ou la similitude avec une suite de comparaison mémorisée dans un dispositif de mémoire est contrôlée, et selon lequel en cas de coïncidence ou de coïncidence partielle, une indication inchangée ou éventuellement corrigée de caractère est produite, et

- selon lequel, dans le dispositif de mémoire, un lexique est établi
    - par sélection et mémorisation des suites ne contenant aucun caractère de renvoi,
    - par actualisation continue des suites mémorisées grâce à des suites ne contenant également aucun caractère de renvoi et formées en permanence à partir de suites de signaux nouvellement lues, et
    - par enregistrement de la fréquence de suites respectivement identiques, et
- selon lequel, une fois le lexique établi, chaque nouvelle suite, qui comporte également des caractères de renvoi et de substitution, est comparé à la suite mémorisée du lexique et plusieurs suites identiques et/ou aussi semblables que possible sont déterminées avec leur fréquence respective, et
- selon lequel la suite la meilleure possible du point de vue de la similitude et de la fréquence est sélectionnée en vue de la poursuite de l'évaluation, et
- selon lequel une correction prévue sur la base de la comparaison du contexte n'est exécutée que lorsque le passage de substitution est probable sur la base de la caractéristique du dispositif de classement pour le caractère respectivement considéré.

2. Procédé suivant la revendication 1, caractérisé par le fait que lors d'une exploration d'un document, d'un formulaire ou analogue, contenant plusieurs lignes, pour différentes lignes ou différents groupes de lignes il est prévu respectivement un dispositif de mémoire partielle, dans lequel sont mémorisées des suites de comparaison respectivement associées.

## FIG 1

```
┌─────────┐   ┌─────────┐   ┌─────────┐   ┌─────────┐
│   ABT   │───│   SEG   │───│   KLK   │───│   KON   │
└─────────┘   └─────────┘   └─────────┘   └─────────┘
```

## FIG 2

```
┌─────────────┐                 ┌─────────────┐
│     ERK     │                 │     LS      │
└─────────────┘                 └─────────────┘
         \  ZF                  LZF  /
          \                        /
           ┌─────────────┐
           │     LSU     │
           └─────────────┘
                 │
           ┌─────────────┐
           │    KORS     │
           └─────────────┘
                 │
           ┌─────────────┐
           │     AWS     │
           └─────────────┘
```

# FIG 3